# EUROPEAN PATENT APPLICATION

(11) **EP 4 287 426 A1**
(43) Date of publication of application: **06.12.2023**
(21) Application number: 22176952.4
(22) Date of filing: 02.06.2022
(51) Int. Cl.: H02G 1/12

(54) **STRIPPING SYSTEM**

(71) Applicant: Aptiv Technologies Limited, St. Michael (BB)
(72) Inventor: CARROLO, Nuno, 1500-911 Lisboa (PT); JIANLIANG, Qiu, 2785-355 Lisboa (PT); MATIAS, Pedro, 1750-465 Lisboa (PT); DE ALMEIDA AUGUSTO, Gilberto, 2650-151 Amadora (PT)
(74) Representative: Bardehle Pagenberg Partnerschaft mbB Patentanwälte Rechtsanwälte

(57) **Abstract**

The present disclosure relates to a method and a stripping system 1 for stripping a shield and/or an insulation of an end of an electric cable 100. The system comprising a first cutting means 16 and a second cutting means 26. The second cutting means 26 being movable relative to the first cutting means 16 and includes a cutting edge 28. Further, the system comprises a stopping means 32, providing a stopping face 38 for the end to be stripped of the electric cable 100. The stopping means 32 being movable relative to the second cutting means 26. Further, the system comprises a stripping length adjustment means. The stripping length adjustment means being adapted to automatically adjust a distance l between the cutting edge 28 of the second cutting means 26 and the stopping face 38 prior to cutting the shield and/or insulation of the electric cable to adjust a pre-defined stripping length by moving the stopping means 32 relative to the second cutting means 26, wherein the first and the second cutting means 16, 26 are configured to cut a shield and/or an insulation of an electric cable circumferentially at a position corresponding to the pre-defined stripping length and to strip the excess shield and/or insulation.

## Description

### 1. Field of the invention

The present disclosure relates to a method and a system for stripping a shield and/or an insulation of an end of an electric cable.

### 2. Background

Electric cables typically include one or more electric conductors, being surrounded by an insulation. In certain applications, known cables further include an electrically conductive shield (shield) that surrounds the conductors and is also surrounded by an insulator. Those shielded cables are typically used in high-voltage applications, such as the charging train of electrical vehicles and/or the like. The shield may be provided in form of an electrically conductive foil, such as a metal foil or in form of a braiding.

For installing the cable e.g. in a cable harness, or for installing electrical terminals, the insulation and the shield have to be stripped at a pre-defined length, each. To achieve the required repeatability stripping devices or stripping machines are typically used for stripping the cable ends. Known stripping machines, such as the BERI.CO.CUT V₃, delivered by FEINTECHNIK R.Rittmeyer GmbH require a high degree of manual interaction. Particularly the adjustment of the desired stripping length is done manually in those known machines and hence, different stripping lengths for manufacturing different parts cannot be memorized or adjusted automatically.

This bears the risk of inaccurate or even incorrect stripping length adjustment. Further, due to the manual adjustment processing time is increased.

It is therefore an object of the present disclosure to improve stripping devices and stripping machines and to overcome the aforementioned drawbacks.

### 3. Summary of the invention

The object is at least partially achieved by stripping system according to claim 1 and a method according to claim 14. Further aspects of the present disclosure are given in the dependent claims.

Particularly, the object is achieved by a stripping system for stripping a shield and/or an insulation of an end of an electric cable. The inventive system comprises a first cutting means and a second cutting means, wherein the second cutting means is movable relative to the first cutting means and includes a cutting edge.

The first cutting means can be a cutting plate, that interacts with the second cutting means for cutting the shield (e.g. a foil, braiding, and/or the like). Instead of cutting and stripping the cable's shield only, the cutting means may be designed to cut an insulation of the cable and/or an insulation and the shield. This may be done simultaneously (i.e. in one operation) or subsequently.

The first cutting means may include a through opening for receiving the electric cable. Thus, for cutting and stripping an end of the cable, this end is inserted into the stripping system through the through opening of the first cutting means. A cutting face of the first cutting means that interacts with the cutting edge of the second cutting means may encircle the end of the cable to be stripped. This allows for an accurate and precise cutting and stripping of the shield (and/or the insulation) at a position that corresponds to the predefined stripping length.

The second cutting means may be a cutting tube, that receives an end portion of the cable. The cutting edge of the second cutting means may be a circumferentially extending cutting edge that interacts with the first cutting means (e.g. a cutting plate). The cutting can be achieved by axially moving the second cutting means toward the first cutting means, thereby sandwiching the shield (and/or insulation) to be cut between the first and second cutting means and finally cutting the shield (and/or insulation).

Additional to the axial movement, the first and/or second cutting means can be rotated, supporting the cutting movement. Particularly, the second cutting means may be rotationally moveable around a longitudinal axis of the electric cable relative to the first cutting means. This rotational movement maybe oscillating or unidirectional. Further, this rotational movement may be driven by means of an electric motor, a pneumatic actuator, a hydraulic actuator and/or the like. This rotational movement allows for an accurate and precise cutting and stripping of the shield.

The system further comprises a stopping means, providing a stopping face for the end to be stripped of the electric cable. The stopping means allows to precisely align the cable within the stripping system. Hence accurate stripping can be achieved repeatedly. Particularly, the cable end to be stripped engages with the stopping face of the stopping means, thereby defining the axial position of the cable within the stripping system.

The stopping means is movable relative to the second cutting means. Hence, a predefined stripping length can be adjusted by moving the stopping means relative to the second cutting means.

For example, the second cutting means may be a cutting tube, and the stopping means may be at least partially located in the cutting tube. Thus, the cutting tube can surround the end to be stripped of the cable. The parts of the cable that shall not be cut and stripped are received within the cutting tube and are hence protected. By engaging the inner stopping means, respectively the stopping face thereof, the cut can be performed accurately at a position that corresponds to the predefined stripping length.

Particularly, the system further comprises a stripping length adjustment means, which is adapted to automatically adjust a distance l between the cutting edge of the second cutting means and the stopping face of the stopping means prior to cutting the shield (and/or an insulation) of the electric cable. By adjusting the distance l, a pre-defined stripping length is adjusted particularly by moving the stopping means relative to the second cutting means. This automated adjustment allows to always achieve an accurate and correct stripping length. Further, processing time is reduced as no manual adjustment is required.

Further, the system's stripping length can be rapidly changed, allowing to process small series of even single parts in rapid succession, increasing the variably of the system.

Particularly, the system may be programmed so as to automatically provide a sequence of different stripping lengths. Thus, a series of different cables can be processed in a row, or different ends of a cable can be provided with different stripping lengths without the need of manually adjusting the stripping length.

The first and the second cutting means are configured to cut a shield (and/or an insulation) of an electric cable circumferentially at a position corresponding to the pre-defined stripping length and to strip the excess shield. Thus, after being cut, the excess shield is stripped.

The first and second cutting means can be removeable. By providing different types of first and/or second cutting means, the stripping system can be adapted to stripping different kinds of cables or to stripping cables of different diameters.

The stripping system may further comprise a locking means. The locking means is configured to automatically lock the stopping means, so that the stopping means is fixed relative to the second cutting means at least in an axial direction. Thus, a distance l between the cutting edge of the second cutting means and the stopping face of the stopping means does not change, and the adjusted stripping length is fixed, as long as the stopping means is locked. Therefore, an accurate repeated stripping can be achieved. Particularly, the locking means may comprise a drive that can be controlled e.g. by a control unit, to achieve the locking. In an exemplary embodiment, the locking means may include an axially movable locking pin. The locking can the be achieved by engaging the locking pin of the locking means with the stopping means. Particularly, the drive of the locking means may move the locking pin axially in and out of locking engagement.

The stripping system may further comprise a control unit. The control unit is adapted to control the stripping length adjustment means and/or the drive of the locking means. For controlling the stripping length adjustment means, at least a value of the pre-defined stripping length is provided by the control unit. For example, the control unit may include a memory having stored thereon multiple values of pre-defined stripping lengths. Thus, the stripping length adjustment means can be controlled in a manner that a desired pre-defined stripping length (or a sequence of predefined stripping lengths) is automatically adjusted. Further, recurring stripping lengths can be stored for repeatedly manufacturing same types of stripped cables. This allows reducing the set-up times.

For example, the stripping system may be configured to stripping different length on each side of an electric cable. Thus, the control unit may alternately adjust a first stripping length, being associated to a first end of the cable and a second stripping length, being associated to a second end of the cable. Thus, the worker will simply need to insert the first and second ends of the cable subsequently, and the stripping system will automatically adjust the respective pre-defined stripping lengths. This speeds up and facilitates the stripping workflow.

In particular, the stripping system may further comprise a scanner being connected to the control unit. The connection may be wired or wireless. The scanner can be any type of suitable scanner that is configured to scan a machine-readable object (scannable object). The machine-readable object maybe associated with a value of the pre-defined stripping length to be adjusted. Thus, by scanning the machine-readable object the control unit will receive a value of the desired pre-defined stripping length and may control the stripping length adjustment means so as to adjust the desired pre-defined stripping length being associated with the respective machine-readable object. Hence it is possible to automatically adjust the stripping length after scanning the machine-readable object. The machine-readable object may be any kind of letters, numbers or codes, such as a barcode, a QR-Code, a Matrix Code and/or the like. The machine-readable object may be imprinted or otherwise fixed to the cable to be stripped.

Alternatively, the scanner may include an image recognition means for directly recognizing the cable to be striped. The control unit may then provide an associated predefined stripping length for the recognized cable.

Further, the control unit may define a scan order of scannable objects that have to be scanned before the stripping system allows stripping a cable end. This allows that certain parameters need to be checked and found to be correct prior to stripping. For example, at first, the cable to be stripped must be scanned. Subsequently, the first and/or second cutting means may need to be scanned. Hence, it can be assured that the cable and the cutting means match. Further, a calibration procedure may need to be confirmed by scanning prior stripping. For example, a scannable object maybe displayed on the control unit after having successfully run a calibration procedure. After scanning this object, the stripping can be allowed. This allows to control the human interaction with the stripping system and hence to reduce the failure rate.

Still further, the control unit may be configured to count the number of stripping operations being performed with an adjusted pre-defined stripping length. Thus, the number of stripped cables can be controlled. This enhances the traceability of the stripping process. Further, after having reached a pre-defined number of successful stripping operations, the control unit may block the stripping system until a user confirms to proceed with (another) stripping operation. Thus, there is no need for the user to manually count the number of cables that are stripped.

The stripping system may further comprise a calibration sensor. The sensor may be any kind of sensor, allowing to measure an actual distance between the cutting edge of the second cutting means and the stopping face for calibrating the stripping length adjustment means. The sensor can measure the distance directly or indirectly. The measurement must allow the control unit to compare the actual (measured) distance with the distance corresponding to the presently adjusted stripping length. This comparison of measured and targeted distance allows to calibrate the stripping length adjustment means so as to adjust the predefined stripping length as accurate as possible. To further enhance the accuracy, the control unit may be configured to require a calibration prior to the stripping operation.

For example, the calibration can be done, when the stopping means is in its zero position, i.e. when the stopping face and the cutting edge are in the same axial position (distance l = o mm). The calibration sensor can then measure (verify) that the actual distance l is indeed zero. If so, the control unit may set the value for the presently adjusted stripping length to zero.

The stripping length adjustment means may include a driven gearing for transforming a rotational movement in an axial movement of the stopping means relative to the second cutting means. Thus, the distance l and accordingly the predefined stripping length can be automatically adjusted. The driven gearing is e.g. driven by a rotational drive (e.g. an electric motor, such as a stepper motor, or a pneumatic drive, a hydraulic drive, or the like). The rotational movement of the rotational drive is then transformed in an axial movement of the stopping means. It has to be noted, that it is not required that the rotational drive directly drives the driven gear. There can be further gears, gearing stages and/or transmission means (e.g. chain(s), belt(s) and/or the like) between the rotational drive and the driven gearing. The rotational may be controlled by the control unit to adjust the pre-defined stripping length. Thus, an automated adjustment of the pre-defined stripping length can be achieved.

The driven gearing for transforming a rotational movement in an axial movement may be self-locking. Hence, an abutting force applied on the stopping face of the stopping means will not lead to a change of distance l.

In an alternative embodiment, the stripping length adjustment means may include a linear motor for adjusting the distance l. The linear motor maybe controlled by the control unit to adjust the pre-defined stripping length. Thus, an automated adjustment of the pre-defined stripping length can be achieved.

The stripping length adjustment means may further include a length adjustment gear, being coupled to the driven gearing for transforming a rotational movement in an axial movement, wherein the length adjustment gear meshes with a drive gear. The drive gear may be driven by the rotational drive, e.g. an electric motor, such as a stepper motor. The rotational drive may be controlled by the control unit to adjust the pre-defined stripping length. Thus, an automated adjustment of the pre-defined stripping length can be achieved.

The rotational drive (e.g. an electric motor) maybe fixed in the axial direction relative to the second cutting means. The length adjustment gear may be fixed in the axial direction relative to the stopping means. Thus, when adjusting the pre-defined stripping length, the length adjustment gear may move relative (in an axial direction) to the rotational drive.

To compensate for this movement, the drive gear may be supported slidable but rotationally fixed on a drive shaft, wherein the drive shaft is driven by the rotational drive/electric motor. The stripping length adjustment means may further includes a preload means, such as a spiral spring, urging the drive gear in meshing engagement with the length adjustment gear. Thus, a proper meshing can be ensured, irrespective of the relative axial position of the length adjustment gear and the rotational drive.

The stripping length adjustment means may further include a support shaft and a support gear. The support shaft is axially aligned with the length adjustment gear, wherein the support gear is supported by the support shaft and meshes with the drive gear. This allows to provide for a proper meshing of the drive gear and the length adjustment gear, even under high loads. Particularly, skipping of teeth of the gearing can be prevented. Thus, by controlling the rotational drive, the stripping length can be precisely adjusted.

The objects are further at least partially achieved by a method for stripping a shield of an end of an electric cable by using a stripping system as described above. The method comprising the following steps:
- automatically adjusting a distance l between the cutting edge of the second cutting means and the stopping face to provide a pre-defined stripping length by moving the stopping means relative to the second cutting means;
- partially inserting an electric cable into the stripping system;
- optionally widening the shield of the electric cable at the end to be stripped;
- pushing the end to be stripped of the electric cable against the stopping face of the stopping means, thereby inserting the second cutting means underneath the shield of the electric cable;
- moving the second cutting means towards the first cutting means, thereby cutting the shield of the electric cable circumferentially at a position corresponding to the pre-defined stripping length, and
- stripping the excess shield.

The method may further comprise at least one of the following steps:
- automatically locking the stopping means, so that the stopping means is fixed relative to the second cutting means;
- scanning a machine-readable object, thereby defining a value of the pre-defined stripping length to be adjusted, and/or
- measuring, using a calibration sensor, an actual distance between the cutting edge of the second cutting means and the stopping face and calibrating the stripping length adjustment means.

### 4. Detailed description of the figures

In the following, the accompanying figures are briefly described. Here,
- Fig. 1: shows an illustrative view of a stripping system according to an embodiment of the present disclosure;
- Fig. 2: shows an illustrative view of the stripping system of Fig. 1 under calibration;
- Fig. 3A: shows an illustrative side view of a stripping length adjustment means;
- Fig. 3B: shows a further perspective of the stripping length adjustment means of Fig. 3A, and
- Figs. 4A to 4E: illustrate how a cable end is stripped.

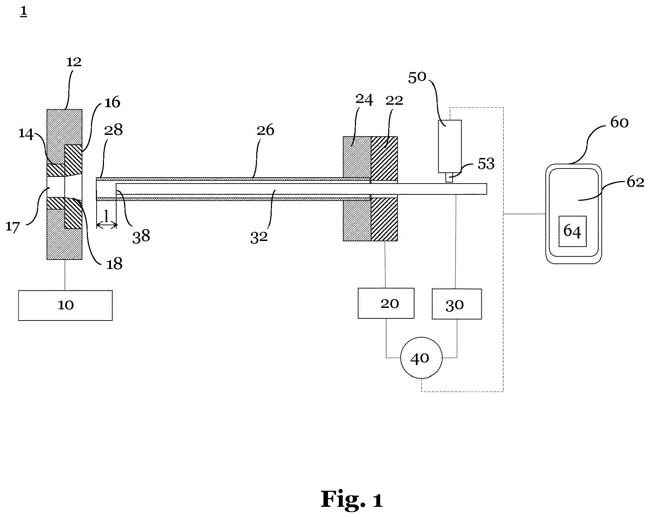

In particular, Fig. 1 shows an illustrative view of a stripping system 1 according to an embodiment of the present disclosure. The stripping system 1 comprises a first cutting means 16 and a second cutting means 26. The first and the second cutting means 16, 26 are configured to cut a shield of an electric cable (not shown) circumferentially at a position corresponding to a pre-defined stripping length and to strip the excess shield.

In Fig. 1, the first cutting means 16 is provided in form of a cutting plate that interacts with the second cutting means 26 for cutting a shield (not shown) of an electric cable. The first cutting means 16 includes a through opening 17 for receiving the electric cable. Thus, for cutting and stripping an end of the cable, this end is inserted into the stripping system 1 through the through opening 17 of the first cutting means 16. A cutting face 18 of the first cutting means 16 that interacts with a cutting edge 28 of the second cutting means 16 encircles the end of the cable to be stripped. This allows for an accurate and precise cutting and stripping of the shield (and/or the insulation) at a position that corresponds to the predefined stripping length l. The predefined stripping length can be automatically adjusted, as described in greater detail below.

The second cutting means 26 is movable relative to the first cutting means 16 in an axial direction. In other words, the first cutting means 16 is arranged stationary. For example, the first cutting means 16 may be held in a receptacle 14 of a stationary part 12 of the stripping system. This stationary part 12 may be fixedly coupled to a stationary base, such as a machine bed.

In particular, the first cutting means 16 can be removably held in the receptacle 14 and hence can be exchanged. By providing different types of first cutting means 16, the stripping system 1 can be adapted to stripping different kinds of cables or to stripping cables of different diameters.

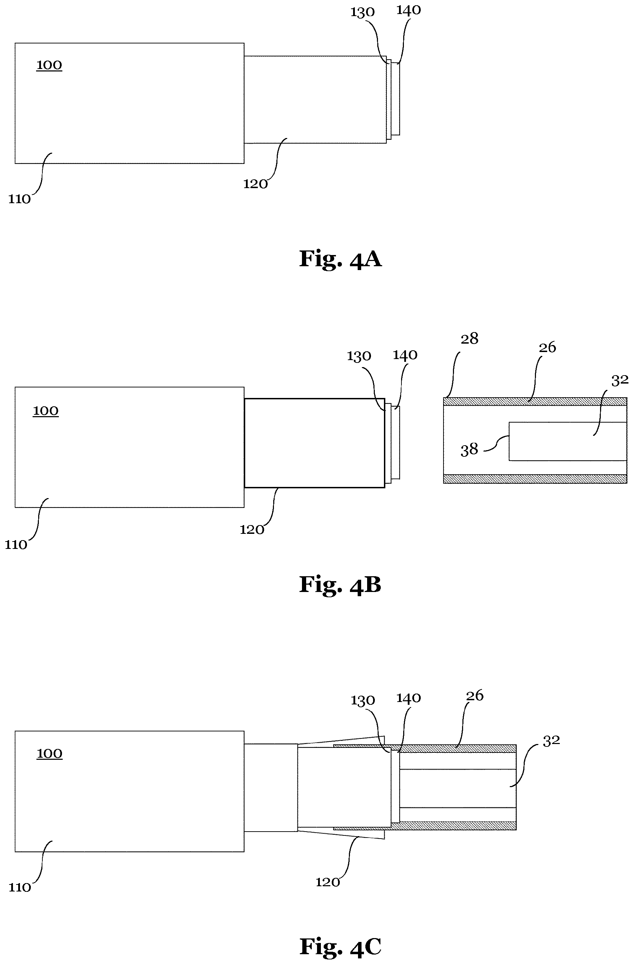

The second cutting means 26 is provided in form of a cutting tube, including a cutting edge 28 at an end facing the first cutting means 16. The second cutting means (cutting tube) is adapted to receive an end portion of the cable (as e.g. shown in Fig. 4C). The cutting edge 28 of the second cutting means 26 is a circumferentially extending cutting edge 28 that interacts with the first cutting means 16. The cutting is achieved by axially moving the second cutting means 26 toward the first cutting means 16, thereby sandwiching the shield (and/or insulation) to be cut between the first and second cutting means 16, 26 and finally cutting the shield (and/or insulation). Additional to the axial movement, the first and/or second cutting means 16, 26 can be rotated, supporting the cutting movement. Particularly, the second cutting means 26 may be rotationally moveable around a longitudinal axis of the electric cable relative to the first cutting means 16.

The second cutting means 26 is movable relative to the first cutting means 16 in an axial direction. For example, the second cutting means 26 may include a coupling 24 for coupling the second cutting means 26 to a movable part 22 of the stripping system **1.** This movable part may be an axially slidable sled, having a base 20. In particular, the second cutting means 26 can be removably coupled via coupling 24 to the movable part 22 and hence can be exchanged. By providing different types of second cutting means 26, the stripping system 1 can be adapted to stripping different kinds of cables or to stripping cables of different diameters.

Further, the stripping system 1 comprises a stopping means 32. The stopping means provides a stopping face 38 for the end to be stripped of the electric cable 100 (cf. also Fig. 4c). The stopping means 32 is arranged movable relative to the second cutting means 26. Particularly, the stopping means 32 can include an axially moveable base 30, such as a sled. By moving the stopping means 32 and the second cutting means 26 relative to each other, a distance l between the cutting edge 28 of the second cutting means 26 and the stopping face 38 can be adjusted. This distance l corresponds to the pre-defined stripping lengths.

In Fig. 1, the second cutting means 26 is a cutting tube, and the stopping means 32 is at least partially located in the cutting tube 26. Thus, the cutting tube surrounds the end to be stripped of the cable (not shown) when the cable end abuts with the stopping face 38. Hence, the parts of the cable that shall not be cut and stripped are received within the cutting tube 26 and are therefore protected.

The stripping system 1 further includes a stripping length adjustment means 40. Said stripping length adjustment means 40 is adapted to automatically adjust a distance l between the cutting edge 28 of the second cutting means 26 and the stopping face 38 prior to cutting the shield of the electric cable to adjust a predefined stripping length by moving the stopping means 32 relative to the second cutting means 26.

The stripping system 1 optionally further comprises a locking means 50. The locking means 50 is configured to automatically lock the stopping means 32, so that the stopping means 32 is fixed relative to the second cutting means 26 at least in an axial direction. Thus, a distance l between the cutting edge 28 of the second cutting means 26 and the stopping face 38 of the stopping means 32 does not change, and the adjusted stripping length is fixed, as long as the stopping means 32 is locked. The locking can e.g. be achieved by engaging a locking pin 53 of the locking means 50 with the stopping means 32. In a particular example, the locking pin 53 can be axially moved by a drive in and out of locking engagement, wherein the drive may be controlled by a control unit 60.

The stripping system 1 optionally further comprises a control unit 60. The control unit 60 is adapted to control the stripping length adjustment means 40 and/or the drive of the locking means 50. For controlling the stripping length adjustment means 40, at least a value of the pre-defined stripping length is provided by the control unit 60. In other examples, the control unit 60 provides for a feedback control of the adjustment of the pre-defined stripping length.

Further, the control unit 60 may include a user interface (e.g. a touch screen, a keyboard, a mouse, and/or the like) to allow a user to interact with control unit 60. Further, the control unit 60 may include a memory 64 having stored thereon multiple values of pre-defined stripping lengths. This memory maybe located locally or in a network/cloud. Thus, the stripping length adjustment means 40 can be controlled in a manner that a desired pre-defined stripping length (or a sequence of predefined stripping lengths) is automatically adjusted.

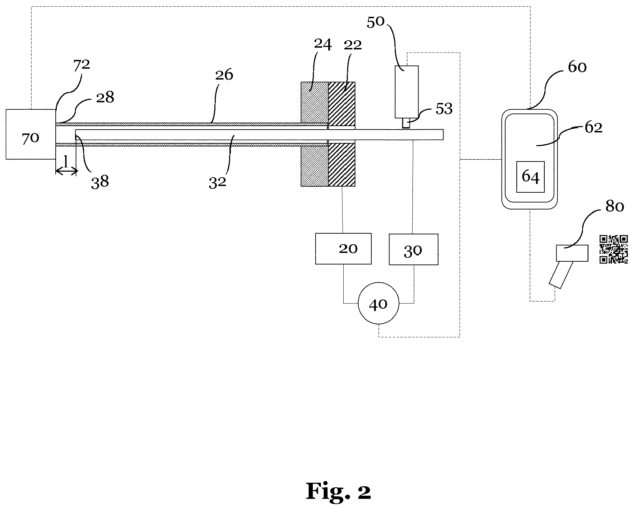

As shown in Fig. 2, the stripping system 1 may further comprise a scanner 80. The scanner 80 may be connected to the control unit 60. The connection may be wired or wireless. The scanner 80 can be any type of suitable scanner that is configured to scan a machine-readable object (scannable object). The machine-readable object may be associated with a value of the pre-defined stripping length to be adjusted. Thus, by scanning the machine-readable object the control unit 60 will receive a value of the desired pre-defined stripping length and may control the stripping length adjustment means 40 so as to adjust the desired predefined stripping length being associated with the respective machine-readable object. Hence it is possible to automatically adjust the stripping length after scanning the machine-readable object. The machine-readable object maybe any kind of letters, numbers or codes, such as a barcode, a QR-Code, a Matrix Code and/or the like. The machine-readable object maybe imprinted or otherwise fixed to the cable to be stripped.

Alternatively, the scanner 80 may include an image recognition means for directly recognizing the cable to be striped. The control unit 60 may then provide an associated predefined stripping length for the recognized cable.

The stripping system 1 as shown in Fig. 2 is under calibration. Here, the stripping system comprises a calibration sensor 70. The sensor 70 may be any kind of sensor, allowing to measure an actual distance between the cutting edge 28 of the second cutting means 26 and the stopping face 38 for calibrating the stripping length adjustment means 40. For example, the sensor 70 may include an abutment face 72 for abutting the cutting edge 28 and a measuring device for measuring a distance from said abutment face (corresponding to the position of the to cutting edge 28) to the stopping face 38. Thus, when placing the sensor 70 in front of the second cutting means 26, as shown in Fig. 2, the actual distance between the cutting edge 28 of the second cutting means 26 and the stopping face 38 can be precisely measured. The measurement allows the control unit to compare the actual (measured) distance with the distance corresponding to the presently adjusted stripping length. This comparison of measured and targeted distance allows to calibrate the stripping length adjustment means 40.

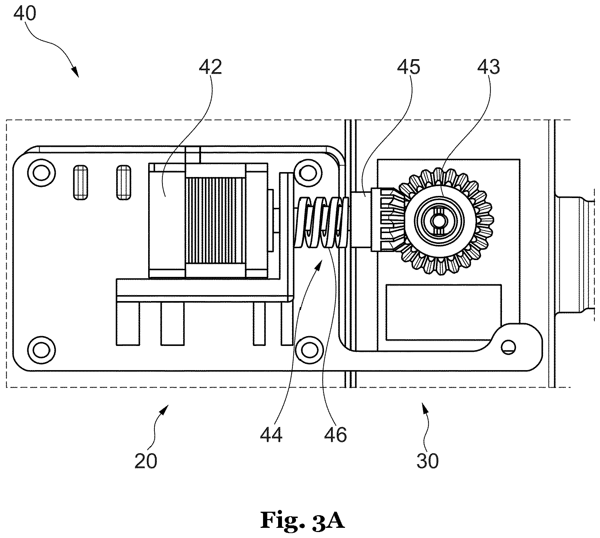

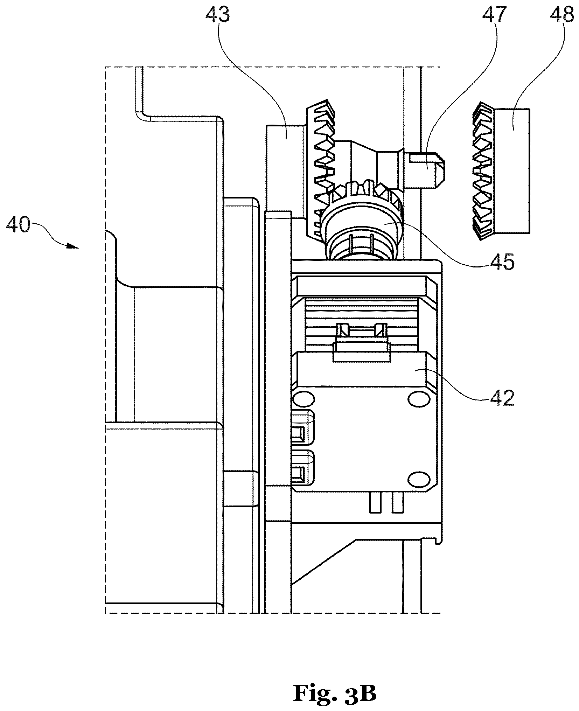

Figs. 3A and 3B show illustrative views of an exemplary stripping length adjustment means 40. Fig. 3A shows a side view and Fig. 3B a further perspective view. The exemplary stripping length adjustment means 40 includes a driven gearing for transforming a rotational movement in an axial movement of the stopping means 32 relative to the second cutting means 26. Thus, the distance l and accordingly the predefined stripping length can be adjusted by providing a rotational drive 42 (e.g. a motor, such as a step motor).

The rotational movement of the rotational drive 42 is then transformed in an axial movement of the stopping means 32. The stripping length adjustment means 40 of Figs. 3A and 3B includes a length adjustment gear 43 (e.g. a bevel gear wheel), being coupled to the driven gearing for transforming a rotational movement in an axial movement. The length adjustment gear 43 meshes with a drive gear 45 (e.g. a further bevel gear wheel). The drive gear 45 is driven by the rotational drive 42. The rotational drive (electric motor) may be controlled by the control unit 60 to adjust the pre-defined stripping length.

The rotational drive 42 is fixed in the axial direction relative to the second cutting means 26. Particularly, the rotational drive 42 is mounted on base 20. The length adjustment gear 43 is fixed in the axial direction relative to the stopping means 32. Particularly, the length adjustment gear 43 is mounted on base 30. Thus, when adjusting the pre-defined stripping length, the length adjustment gear 43 moves relative (in an axial direction) to the rotational drive 42. To compensate for this movement, the drive gear 45 is supported slidable but rotationally fixed on a drive shaft 44, wherein the drive shaft 44 is driven by the rotational drive 42.

The stripping length adjustment means 40 further includes a preload means 46, urging the drive gear 45 in meshing engagement with the length adjustment gear 43. Thus, a proper meshing can be ensured, irrespective of the relative axial position of the length adjustment gear 43 and the rotational drive 42. Particularly, the preload means 46 may be a spiral spring, encircling the drive shaft 44.

The stripping length adjustment means 40 optionally further includes a support shaft 47 and a support gear 48. The support shaft 47 is axially aligned with the length adjustment gear 43, wherein the support gear 48 is supported by the support shaft 47 and meshes with the drive gear 45. This allows to provide for a proper meshing of the drive gear 45 and the length adjustment gear 43, even under high loads.

Figs. 4A to 4E illustrate how a cable end is stripped, using the stripping system 1, described above.

Fig. 4A shows an end of a cable 100 to be stripped. The cable has the following structure. The cable includes at least one electric conductor 140. Those conductor(s) 140 are encircled by an insulating layer 130. A shield 120 (e.g. in form of a metal foil, braiding, and/or the like) surrounds the insulating layer 130. As an outermost sleeve, a further insulation 110 is provided. It has to be understood, that the present structure of the cable 100 is only illustrative and that the stripping system can be used for any other type of cable.

In Fig. 4A, the outer insulation 110 is already partially removed at a cable end. For installing the cable (e.g. to a harness or a cable terminal), also the shield needs to be stripped/shortened at a predefined stripping length. Thus, the cable end is inserted into the stripping system 1**.** For example, the cable can be received in a through opening 17 of the first cutting means 16.

As shown in Fig. 4B, the cable end is aligned with the second cutting means 26, here a cutting tube. A stopping means 32 is at least partially located in the cutting tube 26. The stopping means 32 provides a stopping face 38 for a front face of the end of the cable 100.

In a next step, shown in Fig. 4C, the shield 120 is optionally widened so as to form an umbrella like shape. This widening facilitates the insertion of the cable end in the cutting tube 26. Particularly, the conductor(s) 140 and the insulating layer 130 are partially received in the cutting tube and the front face of the end of the cable 100 abuts with the stopping face 28 of the stopping means 32. The cutting tube 26 is guided underneath the shield 120 to be stripped. The distance l between the cutting edge 28 and the stopping face 38 defines the pre-defined stripping length. This distance l is automatically adjusted by the stripping length adjustment means, as described above.

To maintain the pre-defined stripping length, the stopping means 32 and the second cutting means 26 may be locked by means of a locking means (not shown). This locking means is configured to automatically lock the stopping means. In particular, the by the stripping length adjustment means and/or the locking means may be controlled by a control unit, so as to (i) automatically adjust the predefined stripping length and/or (ii) provide for an automated locking.

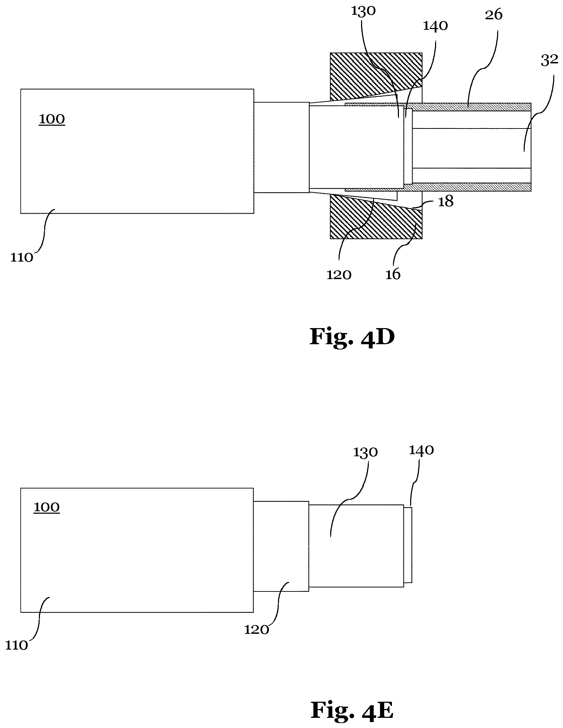

In Fig. 4D, the second cutting means 26 is axially moved toward the first cutting means 16. As the stooping face 38 abuts with the front face of the cable 100, the cable 100 is axially moved together with the second cutting means. This axial movement is stopped by the first cutting means 16. Particularly, the first and second cutting means sandwich the shield 120 (and/or insulation) to be cut. By providing a further axial movement, the shield 120 is cut. This cutting movement can be supported by a rotational movement of the first and/or second cutting means 16, 26.

As shown in Fig. 4E, the excess shield is stripped, and the cable is ready for further processing, e.g. installation of a terminal or integration into a harness.

### 5. List of reference signs

- 1: stripping system
- 10: base (machine bed)
- 12: stationary part
- 14: receptacle
- 16: first cutting means
- 17: trough opening
- 18: cutting face of first cutting means
- 20: base
- 22: moveable part
- 24: coupling
- 26: second cutting means (e.g. cutting tube)
- 28: cutting edge of second cutting means
- 30: base (moveable relative to base 20)
- 32: stopping means
- 38: stopping face
- 40: stripping length adjustment means
- 42: motor (e.g. stepper motor)
- 43: length adjustment gear
- 44: drive shaft
- 45: drive gear
- 46: preload means (e.g. spring)
- 47: support shaft
- 48: support gear
- 50: locking system
- 53: locking pin
- 60: control unit
- 62: user interface
- 64: memory
- 70: calibration sensor
- 80: scanner
- 100: cable
- 110: insulation
- 120: shield (braiding)
- 130: insulation
- 140: electrical conductor(s)
- l: stripping length

## Claims

1. A stripping system (1) for stripping a shield and/or an insulation of an end of an electric cable (100), the system comprising:
a first cutting means (16) and a second cutting means (26), the second cutting means (26) being movable relative to the first cutting means (16) and including a cutting edge (28);
a stopping means (32), providing a stopping face (38) for the end to be stripped of the electric cable (100), the stopping means (32) being movable relative to the second cutting means (26); and
a stripping length adjustment means (40), the stripping length adjustment means being adapted to automatically adjust a distance (l) between the cutting edge (28) of the second cutting means (26) and the stopping face (38) prior to cutting the shield and/or insulation of the electric cable to adjust a pre-defined stripping length by moving the stopping means (32) relative to the second cutting means (26), wherein
the first and the second cutting means (16, 26) are configured to cut a shield and/or an insulation of an electric cable circumferentially at a position corresponding to the pre-defined stripping length and to strip the excess shield and/or insulation.

2. The system of claim 1, further comprising a locking means (50), the locking means being configured to automatically lock the stopping means (32), so as to be fixed relative to the second cutting means (26) at least in an axial direction, wherein the locking means (50) optionally includes an axially movable locking pin (53).

3. The system according to claim 1 or 2, further comprising a control unit (60), the control unit (60) being adapted to control the stripping length adjustment means (40) at least by providing a value of the pre-defined stripping length, wherein
optionally the control unit (60) includes a memory (64) having stored thereon multiple values of pre-defined stripping lengths.

4. The system according to claim 3, further comprising a scanner (80) being connected to the control unit (60), the scanner being configured to scan a machine-readable object, being associated with a value of the pre-defined stripping length to be adjusted.

5. The system according to any one of claims 1 to 4, further comprising a calibration sensor (70), the calibration sensor (70) being adapted to measure an actual distance between the cutting edge (28) of the second cutting means (26) and the stopping face (38) for calibrating the stripping length adjustment means (40).

6. The system according to any one of claims 1 to 5, wherein the first cutting means (16) includes a through opening (17) for receiving the electric cable (100).

7. The system according to any one of claims 1 to 6, wherein the second cutting means (26) is rotationally moveable around a longitudinal axis of the electric cable (100), relative to the first cutting means (16).

8. The system according to any one of claims 1 to 7, wherein the second cutting means (26) is a cutting tube, and wherein the stopping means (32) is at least partially located in the cutting tube.

9. The system according to any one of claims 1 to 8, wherein the stripping length adjustment means (40) includes a driven gearing for transforming a rotational movement in an axial movement of the stopping means (32) relative to the second cutting means (26).

10. The system according to claim 9, wherein the stripping length adjustment means (40) includes a length adjustment gear (43), being coupled to the driven gearing for transforming a rotational movement in an axial movement, wherein the length adjustment gear (43) meshes with a drive gear (45).

11. The system according to claim 10, wherein the drive gear (45) is driven by an electric motor (42), wherein the electric motor is controlled by the control unit (60) to adjust the pre-defined stripping length.

12. The system according to claim 11, wherein
the electric motor is fixed in the axial direction relative to the second cutting means (26), and wherein the length adjustment gear (43) is fixed in the axial direction relative to the stopping means (32), wherein
the drive gear (45) is supported slidable but rotationally fixed on a drive shaft (44), the drive shaft (44) being driven by the electric motor (42), wherein
the stripping length adjustment means (40) further includes a preload means (46) urging the drive gear (45) in meshing engagement with the length adjustment gear (43).

13. The system (1) according to any one of claims 10 to 12, wherein the stripping length adjustment means (40) includes a support shaft (47) and a support gear (48),
the support shaft (47) being axially aligned with the length adjustment gear (43), wherein the support gear (48) is supported by the support shaft (47) and meshes with the drive gear (45).

14. A method for stripping a shield and/or an insulation of an end of an electric cable (100) by using a stripping system (1) according to any one of the previous claims, the method comprising:
automatically adjusting a distance (l) between the cutting edge (28) of the second cutting means (26) and the stopping face (38) to provide a pre-defined stripping length by moving the stopping means (32) relative to the second cutting means (26),
partially inserting an electric cable (100) into the stripping system (1);
optionally widening the shield and/or the insulation of the electric cable (100) at the end to be stripped;
pushing the end to be stripped of the electric cable (100) against the stopping face (38) of the stopping means (32), thereby inserting the second cutting means underneath the shield and/or the insulation of the electric cable (100);
moving the second cutting means (26) toward the first cutting means (16), thereby cutting the shield and/or the insulation of the electric cable (100) circumferentially at a position corresponding to the pre-defined stripping length, and
stripping the excess shield and/or the excess insulation.

15. The method of claim 14, further comprising at least one of the following steps:
automatically locking the stopping means (32), so that the stopping means (32) is fixed relative to the second cutting means (26);
scanning a machine-readable object, thereby defining a value of the pre-defined stripping length to be adjusted, and/or
measuring, using a calibration sensor (70), an actual distance between the cutting edge (28) of the second cutting means (26) and the stopping face (38) and calibrating the stripping length adjustment means (40).
